# EUROPÄISCHE PATENTSCHRIFT

(11) **EP 2 989 947 B1**
(45) Veröffentlichungstag und Bekanntmachung des Hinweises auf die Patenterteilung: **02.01.2019**
(21) Anmeldenummer: 15180699.9
(22) Anmeldetag: 12.08.2015
(51) Int. Cl.: A47J 43/07

(54) **VERRIEGELUNGSELEMENT MIT ABDECKELEMENT FÜR KÜCHENMASCHINE SOWIE KÜCHENMASCHINE**
LOCKING ELEMENT WITH COVER ELEMENT OF A KITCHEN APPLIANCE AND APPLIANCE
ÉLÉMENT DE VERROUILLAGE ET ÉLÉMENT DE REVÊTEMENT POUR UN ROBOT MÉNAGER ET ROBOT MÉNAGER

(30) Priorität: 01.09.2014 DE 102014112519
(43) Veröffentlichungstag der Anmeldung: 02.03.2016
(73) Patentinhaber: Vorwerk & Co. Interholding GmbH, 42275 Wuppertal (DE)
(72) Erfinder: Starflinger, Frank, 44793 Bochum (DE); Schonlau, Elmar, 42799 Leichlingen (DE); Gläser, Thorsten, 51375 Leverkusen (DE)
(74) Vertreter: Müller, Enno

(56) Entgegenhaltungen:
- EP-A1- 1 153 563
- EP-A1- 2 522 263
- CN-A- 1 714 724
- US-A- 5 257 575
- US-A1- 2007 144 358

## Beschreibung

Die Erfindung betrifft ein Verriegelungselement, insbesondere eine Verriegelungswalze, zur Verriegelung eines Gefäßes einer Küchenmaschine mit einem Deckel sowie eine Küchenmaschine mit einem Gefäß, einem das Gefäß zumindest teilweise verschließenden Deckel und zumindest einem Verriegelungselement.

Es ist bekannt, ein Gefäß einer Küchenmaschine mit einem Deckel zu verschließen und mittels eines Verriegelungselementes zu verriegeln. Küchenmaschinen der in Rede stehenden Art sind beispielsweise Kochmixgeräte, welche ein dem Gefäß zugeordnetes Rührwerk sowie eine Heizung aufweisen. Diesbezüglich wird beispielsweise auf die EP 2 698 088 A1 verwiesen. Die dort beschriebene Küchenmaschine ist eine elektrisch betriebene Küchenmaschine mit einem Mixgefäß und einem Deckel für das Mixgefäß, wobei der Deckel in der Verschlussstellung gegen das Mixgefäß verriegelbar ist, wobei weiter das Mixgefäß einen Gefäßboden und eine sich von dem Gefäßboden nach oben erstreckende Gefäßwandung aufweist. Die Küchenmaschine weist des Weiteren ein Verriegelungselement auf, welches zum Übergreifen des Deckels durch Drehen um eine Achse aus einer Freigabestellung in eine Verriegelungsstellung und umgekehrt verlagerbar ist, wobei das Verriegelungselement in Erstreckungsrichtung der Achse langgestreckt ausgebildet ist und in der Verriegelungsstellung den Rand des Gefäßes untergreift und den Rand des Deckels übergreift. Ein Endbereich des Verriegelungselementes ist mit einem in der Küchenmaschine angeordneten Elektromotor verbunden. Der Elektromotor bewirkt die Drehung des Verriegelungselementes von der Freigabestellung in die Verriegelungsstellung und umgekehrt.

Aus der EP-A1-2522263 ist eine Küchenmaschine bekannt, welche Verriegelungselemente aufweist.

Aus der US-A-5257575 ist eine Saftmaschine mit einem Ausguss bekannt, in welchem eine Abdeckung reibschlüssig gehaltert ist. An der Abdeckung ausgebildete Stirnkanten liegen auf einer Stirnfläche von Seitenwandungen des Ausgusses auf.

Die EP-A1-1153563 zeigt eine Küchenmaschine mit einem Verriegelungselement, das sich innerhalb einer damit nicht verbundenen Abdeckung erstreckt. Im Hinblick auf die genannte Küchenmaschine ist insbesondere im Betrieb das Gefäß mit dem Deckel zu verriegeln, da gegebenenfalls große Kräfte beispielsweise durch einen Zerkleinerungsprozess mittels des Rührwerks und/oder durch einen Heizvorgang im Gefäß entstehen können.

Ausgehend von dem dargelegten Stand der Technik beschäftigt sich die Erfindung mit der Aufgabenstellung, ein Verriegelungselement zur Verriegelung eines Gefäßes einer Küchenmaschine mit einem Deckel anzugeben, das im Hinblick auf eine Verschmutzungsneigung und Abreinigbarkeit günstig ausgebildet ist.

Diese Aufgabe ist beim Gegenstand des Anspruches 1 gelöst, wobei darauf abgestellt ist, dass das Verriegelungselement einen Grundkörper und ein den Grundkörper nur teilweise abdeckendes Abdeckelement aufweist, wobei das Abdeckelement zumindest teilweise einen dem Grundkörper zugewandten abgekanteten Randbereich aufweist, mittels welchem das Abdeckelement unter Vorspannung an dem Grundkörper angeordnet ist.

Durch die erfindungsgemäße Ausgestaltung wird ein Verriegelungselement geschaffen, bei welchem das Abdeckelement möglichst spaltarm an dem Grundkörper des Verriegelungselementes angeordnet ist, so dass die Anlagerung von Spalt und Schmutz zwischen dem Verriegelungselement und dem Abdeckelement reduziert oder verhindert wird. Dadurch, dass das Abdeckelement im an dem Grundkörper montierten Zustand vorgespannt ist, wird die spaltarme Anordnung ermöglicht. Dazu ist der Randbereich des Abdeckelementes zumindest teilweise abgekantet, wobei der abgekantete Randbereich bei der Montage des Abdeckelementes zuerst an dem Grundkörper des Verriegelungselementes zur Anlage kommt. Das Abdeckelement kann sodann durch Andrücken an den Grundkörper verformt werden, so dass dieses gegenüber dem Grundkörper vorgespannt wird und sich mit dem abgekanteten Randbereich möglichst spaltfrei gegen den Grundkörper abstützt.

Es ist vorgesehen, dass der Grundkörper ein im Wesentlichen zylinderförmig ausgebildeter Walzenkörper ist, welcher über einen Umfang quer zu einer Längsachse nur teilweise mit dem Abdeckelement versehen ist. Gemäß dieser Ausgestaltung handelt es sich bei dem Verriegelungselement um eine Verriegelungswalze, welche in Erstreckungsrichtung der Längsachse langgestreckt ausgebildet ist und beispielsweise den Rand des Gefäßes untergreifen und den Rand des Deckels übergreifen kann. Das Abdeckelement ist vorteilhaft auf der dem Gefäß und dem Deckel abgewandten Seite des Grundkörpers angeordnet, so dass die nach außen weisende Seite des Verriegelungselementes geschützt ist.

Es wird vorgeschlagen, dass der abgekantete Randbereich des Abdeckelementes im Wesentlichen einen Winkel zwischen 0° und 45° zu einer Flächennormalen der Oberfläche des Grundkörpers aufweist, während ein nicht abgekanteter Randbereich des Abdeckelementes im Wesentlichen einen Winkel zwischen 70° und 90° zu einer Flächennormalen der Oberfläche des Grundkörpers aufweist. Erfindungsgemäß steht der abgekantete Randbereich des Abdeckelementes somit möglichst steil auf der Oberfläche des Grundkörpers, so dass etwaige Spalte möglichst gering sind und vorteilhaft vollständig entfallen. Die nicht abgekanteten Randbereiche des Abdeckelementes verlaufen demgegenüber vorteilhaft parallel zu der Oberfläche, so dass der den abgekanteten Randbereichen vorteilhaft gegenüberliegende Randbereich flächig auf dem Grundkörper anliegt und somit der Befestigung des Abdeckelementes dienen kann.

Es wird vorgeschlagen, dass das Abdeckelement auf den Grundkörper geklebt ist. Dabei kann insbesondere derjenige Bereich des Abdeckelementes genutzt werden, welcher keinen abgekanteten Randbereich aufweist und somit mit einer geeigneten Flächengröße und möglichst flach an dem Grundkörper anliegt. Der nicht mit einer Abkantung versehene Randbereich ist gegenüber den abgekanteten Randbereichen biegeweicher, so dass bei der Montage, d.h. vorteilhaft dem Ankleben, des Abdeckelementes an dem Grundkörper ein Toleranzausgleich quer zu der Andrückrichtung des Abdeckelementes möglich ist, wodurch sich der nicht abgekantete Randbereich entlang des korrespondierenden Teilbereiches der Oberfläche des Grundkörpers bewegt.

Alternativ zu einer Verbindung des Abdeckelementes mit dem Grundkörper durch Verkleben können auch andere Verbindungsmittel vorgesehen sein. Beispielsweise kann das Abdeckelement mit Hilfe von Schrauben, Nieten oder ähnlichem an den Grundkörper des Verriegelungselementes angebracht werden.

Es wird vorgeschlagen, dass das Abdeckelement eine als Freiformfläche ausgebildete Oberfläche aufweist. Durch die erfindungsgemäße Kombination einer Freiformfläche mit einem zumindest abschnittsweise abgekanteten Randbereich kann das Abdeckelement die Konturen des Grundkörpers optimal bedecken, wobei die Entstehung von Spalten zwischen dem Grundkörper und dem Abdeckelement reduziert beziehungsweise vermieden wird, in welchen sich Staub und Schmutz ablagern könnten.

Der abgekantete Randbereich bewirkt beziehungsweise die abgekanteten Randbereiche bewirken eine Versteifung des Abdeckelementes, wobei gleichzeitig die nicht mit einer Abkantung versehenen Randbereiche eine Biegsamkeit bewahren, die etwaige Formabweichungen zwischen dem Abdeckelement und dem Grundkörper ausgleichen kann. Bei einer Anordnung des Abdeckelementes an dem Grundkörper kann so beispielsweise ein etwaig entstehender Spalt zwischen dem Grundkörper und dem Abdeckelement durch Andrücken des Abdeckelementes auf den Grundkörper verschlossen werden. Im Falle einer nur abschnittsweisen Ausbildung eines abgekanteten Randbereiches lassen sich somit Bereiche mit einer erhöhten Formsteifigkeit des Abdeckelementes schaffen, während andere Bereiche demgegenüber biegeweicher sind. Insgesamt lässt sich das Abdeckelement somit optimal an die dreidimensionale Form des Grundkörpers anpassen, so dass die Bildung von Spalten, in welchen sich Staub und Schmutz anlagern könnte, reduziert beziehungsweise verhindert wird.

Es wird vorgeschlagen, dass der abgekantete Randbereich senkrecht zu seiner Kantenlängserstreckung eine Breite aufweist, die mindestens halb so groß und höchstens fünfmal so groß, bevorzugt mindestens genauso groß und höchstens dreimal so groß, besonders bevorzugt ungefähr zweimal so groß, ist wie die Materialstärke des abgekanteten Randbereiches. Die Breite des abgekanteten Randbereiches liegt somit in der Größenordnung der Materialstärke des Abdeckelementes. Sofern die Materialstärke beispielsweise 1 mm beträgt, ist der abgekantete Randbereich mindestens 0,5 mm und höchstens 5 mm breit, bevorzugt mindestens 1 mm und höchstens 3 mm breit, besonders bevorzugt ungefähr 2 mm breit. Durch dieses Verhältnis zwischen Materialstärke und Breite entsteht eine vorteilhafte Versteifung in den abgekanteten Bereichen des Abdeckelementes, während die gewünschte Biegeweichheit in anderen Bereichen der Oberfläche, welche keine Abkantung aufweisen, gegeben ist. Insofern kann das Abdeckelement unter Vermeidung einer Spaltbildung an dem Grundkörper angeordnet werden.

Es wird vorgeschlagen, dass die Oberfläche des Abdeckelementes im Wesentlichen stetig gekrümmt ist, wobei der abgekantete Randbereich zu der konkaven Seite des Abdeckelementes hin abgekantet ist. Durch die Krümmung der Freiformfläche lässt sich das Abdeckelement beispielsweise optimal an den Grundkörper eines Verriegelungselementes anpassen, welches eine teilzylindrische oder sphärische Oberfläche aufweist. Die Abkantung der Randbereiche folgt dabei der Richtung der Krümmung des Abdeckelementes, so dass eine spaltfreie oder spaltreduzierte Anordnung des Abdeckelementes möglich ist. Der Übergang zwischen dem abgekanteten Randbereich und einem von dem Randbereich entfernten Bereich der Oberfläche erfolgt dabei allmählich, d.h. ohne Sprünge, insbesondere ohne Stufen, wobei der Verlauf linear oder nicht linear sein kann.

Die Oberfläche des Abdeckelementes kann in Bezug auf eine Projektion senkrecht zu der Längsachse beispielsweise in eine Rechteckform einbeschreibbar sein, wobei die Oberfläche in Bezug auf mindestens drei Seiten der Rechteckform zumindest teilweise einen abgekanteten Randbereich aufweist. Die Oberfläche des Abdeckelementes kann dabei unterschiedliche geometrische Formen aufweisen, wobei die Form jedoch im Wesentlichen an die Form eines Rechteckes angelehnt ist, d.h. im Vergleich mit einem Rechteck eine Flächenüberdeckung aufweist, welche größer ist als eine Flächenüberdeckung mit anderen geometrischen Formen, in welche die Oberfläche des Abdeckelementes einbeschrieben werden kann. In dem Falle, dass es sich bei dem Verriegelungselement der Küchenmaschine um eine Verriegelungswalze handelt, ergibt sich bei einer Projektion der Verriegelungswalze (senkrecht zu deren Längsachse) auf eine ebene Oberfläche ebenfalls im Wesentlichen eine Rechteckform, so dass das Abdeckelement optimal mit dem Verriegelungselement korrespondiert. Vorteilhaft weist die Oberfläche des Abdeckelementes dabei an mindestens drei Seiten der Rechteckform einen abgekanteten Randbereich auf. Die Oberfläche kann grundsätzlich entlang des gesamten Randbereiches abgekantet sein. Vorzugsweise weist die Oberfläche jedoch nicht entlang ihres gesamten Umfangs abgekantete Randbereiche auf, so dass zumindest abschnittsweise eine übliche Schnittkante verbleibt. Ebenso können einzelne Seiten sowohl abgekantete Randbereiche als auch nicht abgekantete Randbereiche aufweisen. Insbesondere ist es möglich, dass eine Abkantung entlang des betreffenden Randbereiches ausläuft.

Diesbezüglich kann vorgesehen sein, dass zumindest eine erste Seite über deren gesamte Länge einen abgekanteten Randbereich aufweist, wobei die an diese erste Seite angrenzenden zweiten Seiten zumindest in dem an die erste Seite angrenzenden Teilbereich einen abgekanteten Randbereich aufweisen. Sofern das Abdeckelement beispielsweise im Wesentlichen die Form eines nicht quadratischen Rechteckes aufweist, kann eine erste, lange Seite entlang ihres Randbereiches vollständig abgekantet sein, während die beiden angrenzenden kurzen Seiten über ihre halbe Länge abgekantet sind, und zwar in dem Bereich, welcher der langen Seite benachbart ist. Die gegenüberliegende lange Seite sowie die daran angrenzenden Teilbereiche der kurzen Seiten weisen keine Abkantung auf, sondern verfügen über eine übliche Schnittkante. Gemäß dieser Ausgestaltung ergibt sich ein Abdeckelement, welches halbseitig abgekantet ist und halbseitig eine saubere Schnittkante aufweist. Ein solches Abdeckelement kann vorteilhaft so an dem Grundkörper eines Verriegelungselementes angeordnet werden, dass die abgekanteten Bereiche im Wesentlichen (in Bezug auf eine übliche Freigabestellung und/oder Verriegelungsstellung des Verriegelungselementes) vertikal nach oben weisen, während die nicht abgekanteten Randbereiche vertikal nach unten weisen. Somit ist diejenige Seite des Abdeckelementes beziehungsweise des Verriegelungselementes nach oben gerichtet, auf welcher sich zuerst etwaige Ablagerungen von Staub oder Schmutz zeigen könnten. Die demgegenüber bereits durch ihre unterseitige Anordnung geschützten Randbereiche des Abdeckelementes sind nicht abgekantet, so dass aufgrund der dort verbleibenden sauberen Schnittkante eine formkorrespondierende, beispielsweise parallele, Anlage an dem Grundkörper möglich ist.

Es wird vorgeschlagen, dass das Abdeckelement aus einem Metallblech gefertigt ist. Das Metallblech kann insbesondere ein Edelstahl- oder Aluminiumblech sein. Vorteilhaft weist das Blech eine Materialstärke zwischen 0,5 mm und 1,5 mm auf. Dadurch erhält das Abdeckelement in den abgekanteten Randbereichen eine geeignete Formsteifigkeit, während Bereiche der Oberfläche verbleiben, insbesondere in Bezug auf die nicht abgekanteten Randbereiche, welche einen Toleranzausgleich bei der Anordnung des Abdeckelementes an dem Grundkörper ermöglichen. Dieser Toleranzausgleich geschieht bei der Montage des Abdeckelementes durch Bewegung der nicht abgekanteten Randbereiche quer zu der Fügerichtung, d.h. quer zu der Andrückrichtung des Abdeckelementes. Dadurch wird effektiv eine Spaltbildung zwischen dem Abdeckelement und dem Grundkörper verhindert.

Schließlich wird vorgeschlagen, dass das Abdeckelement zumindest ein Drittel der Oberfläche des Grundkörpers abdeckt. Die Oberfläche des Abdeckelementes ist somit zumindest ein Drittel so groß wie die Oberfläche des Grundkörpers. Dadurch kann derjenige Teilbereich des Verriegelungselementes, welcher nicht an dem Gefäß beziehungsweise dem Deckel anliegt, vorteilhaft vor einer Ablagerung von Staub und/oder Schmutz geschützt werden. Besonders vorteilhaft ist das Abdeckelement dabei so groß ausgebildet, dass dieses all diejenigen Oberflächenbereiche des Grundkörpers verdeckt, welche nicht zur Anlage an dem Gefäß beziehungsweise dem Deckel kommen. Je nach der konkreten Ausbildung des Verriegelungselementes kann das Abdeckelement somit zumindest ein Drittel der Oberfläche des Grundkörpers bedecken, vorteilhaft sogar mehr als 75%.

Schließlich wird mit der Erfindung ebenso eine Küchenmaschine mit einem Gefäß, einem das Gefäß zumindest teilweise verschließenden Deckel und zumindest einem Verriegelungselement vorgeschlagen, welches Verriegelungselement ein Abdeckelement - wie zuvor dargestellt - aufweist.

Im Folgenden wird die Erfindung anhand eines Ausführungsbeispiels näher erläutert. Es zeigen:
- Figur 1: eine Küchenmaschine mit einem Gefäß und einem Deckel in einer schematischen Seitenansicht,
- Figur 2: eine Küchenmaschine in perspektivischer Ansicht,
- Figur 3: ein Verriegelungselement mit einem Abdeckelement gemäß einer ersten Ausführungsform in einer geschnittenen Ansicht,
- Figur 4: ein Verriegelungselement mit einem Abdeckelement gemäß einer zweiten Ausführungsform in einer geschnittenen Ansicht,
- Figur 5: ein Abdeckelement in einer Ansicht von unten,
- Figur 6: einen Teilbereich des Abdeckelementes gemäß Figur 5.

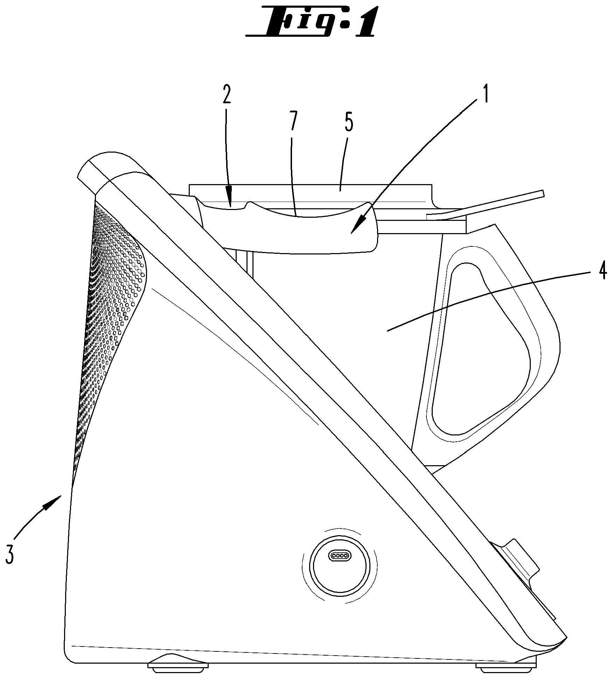

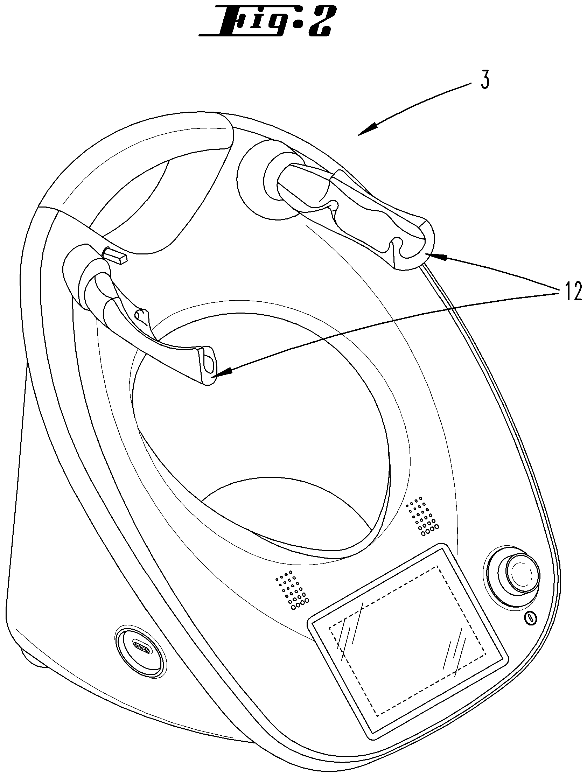

Dargestellt und beschrieben ist zunächst mit Bezug zu den Figuren 1 und 2 eine elektrisch betriebene Küchenmaschine 3. Diese weist zunächst ein Bedienfeld mit bevorzugt einer Mehrzahl von Reglern und/oder Tastern sowie bevorzugt ein Display zum Anzeigen der über die Regler und/oder Taster einzustellenden Parameter auf. Des Weiteren verfügt die Küchenmaschine 3 über eine Gefäßaufnahme.

In die Gefäßaufnahme ist ein Gefäß 4, hier in Form eines Rührgefäßes, einsetzbar. Das Gefäß 4 ist bevorzugt im Wesentlichen rotationssymmetrisch ausgebildet. Im Bodenbereich des Gefäßes 4 kann ein Rührwerk angeordnet sein. Das Rührwerk ist in der Zuordnungsstellung des Gefäßes 4 in der Gefäßaufnahme der Küchenmaschine 3 mit einem in der Küchenmaschine 3 vorgesehenen Rührwerkantrieb gekoppelt. Die Elektroversorgung des den Rührwerkantrieb bildenden Elektromotors sowie einer weiter bevorzugt behälterbodenseitig vorgesehenen Heizung und darüber hinaus auch der elektrischen Steuerung der gesamten Küchenmaschine 3 ist über ein Netzanschlusskabel erreicht.

Das Gefäß 4 ist insbesondere im Betrieb des Rührwerks und/oder der Heizung der Küchenmaschine 3 durch einen Deckel 5 verschlossen. In der ordnungsgemäßen Zuordnungsstellung des Deckels 5 an dem Gefäß 4 stützt sich der Deckel 5 bevorzugt mittels eines Deckelrandes auf einer Auflagefläche des Gefäßes 4 ab. Es empfiehlt sich, das Gefäß 4 und den Deckel 5 zu verriegeln, da im Betrieb der Küchenmaschine 3 gegebenenfalls große Kräfte, beispielsweise durch einen Zerkleinerungsprozess mittels des Rührwerks und/oder durch eine Temperaturerhöhung in dem Gefäß 4, wirken können. Hierzu weist die Küchenmaschine 3 mindestens ein Verriegelungselement 2 auf, welches den Deckel 5 gegen das Gefäß 4 verriegeln kann. Dieses Verriegelungselement 2 ist hier bevorzugt langgestreckt, wellenartig ausgebildet, mit einer zentralen, in Längserstreckung ausgerichteten Längsachse, welche zugleich eine Drehachse des Verriegelungselementes 2 bildet. Das insgesamt langgestreckte zylinderförmige Verriegelungselement 2 ist derart an der Küchenmaschine 3 angeordnet, dass dieses mit Bezug auf eine Draufsicht den Rand des Gefäßes 4 sowie des Deckels 5 sekantenartig schneidet, wobei die axiale Länge des Verriegelungselementes 2 so gewählt ist, dass beide Endbereiche des Verriegelungselementes 2 über den sekantenartig, partiell umfassten Randbereich des Gefäßes 4 beziehungsweise des Deckels 5 hinausragen. Ein Ende des Verriegelungselementes 2 ist mit einem in der Küchenmaschine 3 angeordneten Elektromotor verbunden.

Wie dargestellt, sind bevorzugt zwei parallel zueinander ausgerichtete Verriegelungselemente 2 an der Küchenmaschine 3 vorgesehen, die bevorzugt über jeweils einen Elektromotor gegensinnig drehantreibbar sind. Das insgesamt wellenartige Verriegelungselement 2 ist weiter mit einer sich in dem dargestellten Ausführungsbeispiel gemäß Figur 2 etwa über bevorzugt 60 bis 70% der axialen Länge des Verriegelungselementes 2 erstreckenden Einbuchtung versehen. Diese ist so gestaltet, dass sie korrespondierende Randbereiche des Gefäßes 4 und des Deckels 5 aufnehmen und miteinander verriegeln kann.

Wie in Figur 1 dargestellt, weist das Verriegelungselement 2 ein Abdeckelement 1 auf, welches eine als Freiformfläche ausgebildete Oberfläche 6 aufweist. Die Oberfläche 6 weist zumindest abschnittsweise einen abgekanteten Randbereich 7 auf. Das Abdeckelement 1 überdeckt einen Grundkörper 12 des Verriegelungselementes 2 bevorzugt an denjenigen Oberflächenbereichen, welche im Verriegelungszustand nicht in Kontakt mit dem Gefäß 4 und/oder dem Deckel 5 stehen. In der dargestellten Ansicht weist das Abdeckelement 1 im Wesentlichen eine Rechteckform auf.

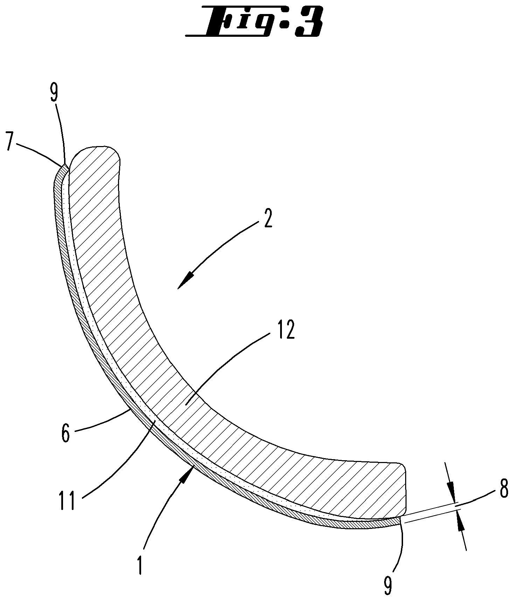

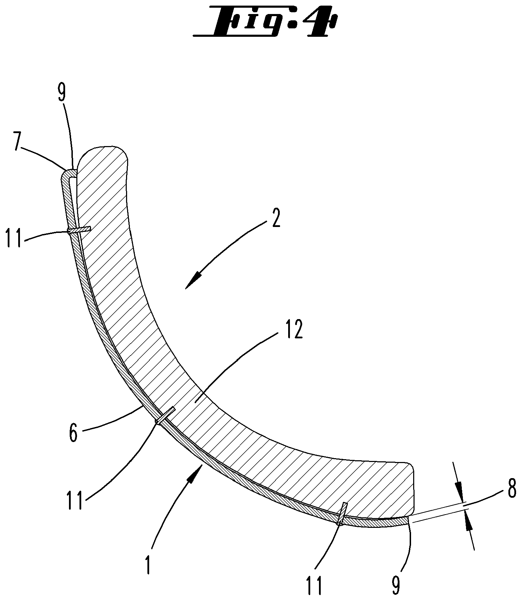

Die Figuren 3 und 4 zeigen den Grundkörper 12 des Verriegelungselementes 2 mit dem daran angeordneten Abdeckelement 1 in einer Schnittdarstellung senkrecht zu der Längserstreckung des Verriegelungselementes 2 beziehungsweise des Abdeckelementes 1. In Bezug auf diesen Schnitt ist der Grundkörper 12 des Verriegelungselementes 2 im Wesentlichen bogenförmig ausgebildet. Das Abdeckelement 1 weist an seinem (in Bezug auf die Blattebene der Figur) oberen Randbereich einen abgekanteten Randbereich 7 auf. Der gegenüberliegende Randbereich ist hingegen nicht abgekantet. Das Abdeckelement 1 ist aus einem Metallblech mit einer Materialstärke 8 von beispielsweise 1 mm gefertigt.

Die Oberfläche 6 des Abdeckelementes 1 ist im Wesentlichen stetig gekrümmt, wobei der abgekantete Randbereich 7 zu der konkaven Seite der gekrümmten Oberfläche 6 hin abgekantet ist. Die konkave Seite des Abdeckelementes 1 weist in Richtung der konvexen Seite des bogenförmigen Grundkörpers 12.

Zwischen dem Grundkörper 12 und dem Abdeckelement 1 ist ein Verbindungsmittel 11 angeordnet. Gemäß Figur 3 ist das Verbindungsmittel 11 ein Klebstoff, welcher auf die konvexe Seite des Grundkörpers 12 und/oder die konkave Seite des Abdeckelementes 1 aufgebracht wird. Sodann wird das Abdeckelement 1 mittels des abgekanteten Randbereiches 7 in Kontakt mit dem Verriegelungselement 2 gebracht. Gemäß Figur 4 ist das Verbindungsmittel 11 alternativ eine Vielzahl von Nieten, welche sowohl in den Grundkörper 12 als auch in das Abdeckelement 11 eingreifen.

Der abgekantete Randbereich 7 des Abdeckelementes 1 weist dabei im gezeigten Ausführungsbeispiel einen Winkel von ungefähr 45° (Figur 3) beziehungsweise 0° (Figur 4) zu der Flächennormalen der Oberfläche des Grundkörpers 12 auf. Der dem abgekanteten Randbereich 7 entgegengesetzte Randbereich des Abdeckelementes 1 ist nicht abgekantet, sondern folgt der Krümmung der Oberfläche 6 des Abdeckelementes 1. Zwischen diesem Randbereich und dem Grundkörper 12 besteht im Wesentlichen ein Winkel von ca. 20°. Zur Befestigung des Abdeckelementes 1 wird das Abdeckelement 1 auf den Grundkörper 12 aufgedrückt, wobei sich im Wesentlichen nur die nicht abgekanteten Randbereiche des Abdeckelementes 1 quer zu der Andrückrichtung verschieben. Dabei wird das Abdeckelement 1 gegenüber dem Grundkörper 12 vorgespannt, so dass das Abdeckelement 1 möglichst spaltarm an dem Grundkörper 12 anliegt. Der abgekantete Randbereich 7 bewirkt eine Versteifung des Abdeckelementes 1, während der nicht mit einer Abkantung versehene gegenüberliegende Randbereich des Abdeckelementes 1 über die für einen Längenausgleich notwendige Biegeweichheit verfügt. Nach erfolgter Montage ist das Abdeckelement 1 mit geringstmöglicher Spaltbildung an dem Grundkörper 12 angeordnet.

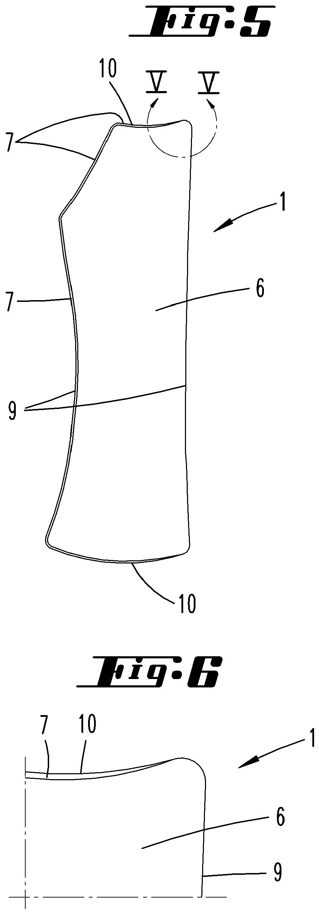

Figur 5 zeigt das Abdeckelement 1 in einer Ansicht von unten, d.h. in einer Ansicht auf die konkave Seite der Oberfläche 6. Die als Freiformfläche ausgebildete Oberfläche 6 ist in dieser Ansicht im Wesentlichen in eine Rechteckform einbeschreibbar, wobei die Oberfläche 6 in Bezug auf mindestens drei Seiten 9, 10, nämlich zwei lange erste Seiten 9 und zwei kurze zweite Seiten 10, zumindest teilweise einen abgekanteten Randbereich 7 aufweist. Speziell weist eine erste Seite 9 (in der dargestellten Blattebene links) über deren gesamte Länge einen abgekanteten Randbereich 7 auf, während die an diese erste Seite 9 angrenzenden zweiten Seiten 10 (in der Blattebene oben und unten) zumindest in dem an die erste Seite 9 angrenzenden Teilbereich einen abgekanteten Randbereich 7 aufweisen.

Figur 6 zeigt wie der abgekantete Randbereich 7 der oberen zweiten Seite 10 entlang der Längserstreckung der Seite 10 ausläuft. Der abgekantete Randbereich 7 weist jeweils eine Breite auf, welche ungefähr dem zweifachen der Materialstärke 8 entspricht.

### Bezugszeichenliste:

- 1: Abdeckelement
- 2: Verriegelungselement
- 3: Küchenmaschine
- 4: Gefäß
- 5: Deckel
- 6: Oberfläche
- 7: abgekanteter Randbereich
- 8: Materialstärke
- 9: erste Seite
- 10: zweite Seite
- 11: Verbindungsmittel
- 12: Grundkörper

## Patentansprüche

1. Verriegelungselement (2), insbesondere Verriegelungswalze, zur Verriegelung eines Gefäßes (4) einer Küchenmaschine (3) mit einem Deckel (5), **dadurch gekennzeichnet, dass** das Verriegelungselement (2) einen Grundkörper (12) und ein den Grundkörper (12) nur teilweise abdeckendes Abdeckelement (1) aufweist, wobei das Abdeckelement (1) zumindest teilweise einen dem Grundkörper (12) zugewandten abgekanteten Randbereich (7) aufweist, mittels welchem das Abdeckelement (1) unter Vorspannung an dem Grundkörper (12) angeordnet ist.

2. Verriegelungselement (2) nach Anspruch 1, **dadurch gekennzeichnet, dass** der Grundkörper (12) ein im Wesentlichen zylinderförmig ausgebildeter Walzenkörper ist, welcher über einen Umfang quer zu einer Längsachse nur teilweise mit dem Abdeckelement (1) versehen ist.

3. Verriegelungselement (2) nach Anspruch 1 oder 2, **dadurch gekennzeichnet, dass** der abgekantete Randbereich (7) des Abdeckelementes (1) im Wesentlichen einen Winkel zwischen 0° und 45° zu einer Flächennormalen der Oberfläche des Grundkörpers (12) aufweist, während ein nicht abgekanteter Randbereich des Abdeckelementes (1) im Wesentlichen einen Winkel zwischen 70° und 90° zu einer Flächennormalen der Oberfläche des Grundkörpers (12) aufweist.

4. Verriegelungselement (2) nach einem der vorhergehenden Ansprüche, **dadurch gekennzeichnet, dass** das Abdeckelement (1) auf den Grundkörper (12) geklebt ist.

5. Verriegelungselement (2) nach einem der vorhergehenden Ansprüche, **dadurch gekennzeichnet, dass** das Abdeckelement (1) eine als Freiformfläche ausgebildete Oberfläche (6) aufweist.

6. Verriegelungselement (2) nach einem der vorhergehenden Ansprüche, **dadurch gekennzeichnet, dass** der abgekantete Randbereich (7) senkrecht zu seiner Kantenlängserstreckung eine Breite aufweist, die mindestens halb so groß und höchstens fünfmal so groß, bevorzugt mindestens genau so groß und höchstens dreimal so groß, besonders bevorzugt ungefähr zweimal so groß, ist wie die Materialstärke (8) des abgekanteten Randbereiches (7).

7. Verriegelungselement (2) nach einem der vorhergehenden Ansprüche, **dadurch gekennzeichnet, dass** die Oberfläche (6) des Abdeckelementes (1) im Wesentlichen stetig gekrümmt ist, wobei der abgekantete Randbereich (7) zu der konkaven Seite des Abdeckelementes (1) hin abgekantet ist.

8. Verriegelungselement (2) nach einem der vorhergehenden Ansprüche, **dadurch gekennzeichnet, dass** das Abdeckelement (1) aus einem Metallblech gefertigt ist.

9. Küchenmaschine (3) mit einem Gefäß (4), einem das Gefäß (4) zumindest teilweise verschließenden Deckel (5) und zumindest einem Verriegelungselement (2) nach einem der Ansprüche 1 bis 8.

## Claims

1. Locking element (2), in particular a locking roller, for locking a vessel (4) of a kitchen appliance (3) that has a lid (5), **characterised in that** the locking element (2) comprises a main body (12) and a cover element (1) which covers the main body (12) only in part, the cover element (1) comprising, at least in part, a chamfered edge region (7) that faces the main body (12), by means of which edge region the cover element (1) is arranged in a pre-tensioned manner on the main body (12).

2. Locking element (2) according to claim 1, **characterised in that** the main body (12) is a substantially cylindrical roller body which is only partly provided with the cover element (1) over one extent, transversely to a longitudinal axis.

3. Locking element (2) according to either claim 1 or claim 2, **characterised in that** the chamfered edge region (7) of the cover element (1) substantially has an angle of between 0° and 45° with respect to a surface normal of the surface of the main body (12), whereas an unchamfered edge region of the cover element (1) substantially has an angle between 70° and 90° with respect to a surface normal of the surface of the main body (12).

4. Locking element (2) according to any of the preceding claims, **characterised in that** the cover element (1) is glued to the main body (12).

5. Locking element (2) according to any of the preceding claims, **characterised in that** the cover element (1) has a surface (6) in the form of a freeform surface.

6. Locking element (2) according to any of the preceding claims, **characterised in that** the chamfered edge region (7) has, perpendicularly to the longitudinal edge extension thereof, a width that is at least half as great and at most five times as great, preferably at least exactly the same and at most three times as great, particularly preferably approximately twice as great, as the material thickness (8) of the chamfered edge region (7).

7. Locking element (2) according to any of the preceding claims, **characterised in that** the surface (6) of the cover element (1) is substantially continuously curved, the chamfered edge region (7) being chamfered towards the concave face of the cover element (1).

8. Locking element (2) according to any of the preceding claims, **characterised in that** the cover element (1) is made of a sheet metal.

9. Kitchen appliance (3) comprising a vessel (4), a lid (5) that seals the vessel (4) at least in part, and at least one locking element (2) according to any of claims 1 to 8.

## Revendications

1. Élément de verrouillage (2), en particulier un rouleau de verrouillage, destiné à verrouiller un récipient (4) d'un appareil de cuisine (3) avec un couvercle (5), **caractérisé en ce que** l'élément de verrouillage (2) comprend un corps de base (12) et un élément de recouvrement (1) ne recouvrant que partiellement le corps de base (12), dans lequel l'élément de recouvrement (1) présente au moins partiellement une zone de bord repliée (7) qui est tournée vers le corps de base (12), au moyen duquel l'élément de recouvrement (1) est agencé sous précontrainte sur le corps de base (12).

2. Élément de verrouillage (2) selon la revendication 1, **caractérisé en ce que** le corps de base (12) est un corps de rouleau formé de manière sensiblement cylindrique, qui est pourvu seulement partiellement avec l'élément de recouvrement (1) sur une circonférence transversale à un axe longitudinal.

3. Élément de verrouillage (2) selon la revendication 1 ou 2, **caractérisé en ce que** la zone de bord repliée (7) de l'élément de recouvrement (1) présente un angle compris sensiblement entre 0° et 45° par rapport à une normale à la surface du corps de base (12), tandis qu'une zone de bord non repliée de l'élément de recouvrement (1) présente un angle compris sensiblement entre 70° et 90° par rapport à une normale à la surface du corps de base (12).

4. Élément de verrouillage (2) selon l'une des revendications précédentes, **caractérisé en ce que** l'élément de recouvrement (1) est collé sur le corps de base (12).

5. Elément de verrouillage (2) selon l'une des revendications précédentes, **caractérisé en ce que** l'élément de recouvrement (1) présente une surface (6) conçue comme une surface de forme libre.

6. Elément de verrouillage (2) selon l'une des revendications précédentes, **caractérisé en ce que** la zone de bord repliée (7) présente une largeur perpendiculaire à son extension longitudinale de bord qui est égale à au moins la moitié de l'épaisseur de matériau (8) de la zone de bord repliée (7) et au plus à cinq fois celle-ci, et est préférentiellement au moins égale à celle-ci et au plus à trois fois celle-ci, et de manière particulièrement préférentielle est égale à environ deux fois celle-ci.

7. Elément de verrouillage (2) selon l'une des revendications précédentes, **caractérisé en ce que** la surface (6) de l'élément de recouvrement (1) est incurvée de manière sensiblement continue, dans lequel la zone de bord repliée (7) est repliée vers le côté concave de l'élément de recouvrement (1) .

8. Elément de verrouillage (2) selon l'une quelconque des revendications précédentes, **caractérisé en ce que** l'élément de recouvrement (1) est réalisé à partir d'une tôle métallique.

9. Appareil de cuisine (3) ayant un récipient (4), un couvercle (5) fermant au moins partiellement le récipient (4) et au moins un élément de verrouillage (2) selon l'une des revendications 1 à 8.
